# EUROPEAN PATENT APPLICATION

(11) **EP 4 831 796 A1**
(43) Date of publication of application: **28.10.2026**
(21) Application number: 26173987.4
(22) Date of filing: 22.04.2026
(51) Int. Cl.: G06F 8/65

(54) **IMAGE PROCESSING APPARATUS AND IMAGE PROCESSING APPARATUS CONTROL METHOD**

(30) Priority: 23.04.2025 JP 2025071057
(71) Applicant: KYOCERA Document Solutions Inc., Osaka-shi, Osaka 540-8585 (JP)
(72) Inventor: Hirabe, Masato, Osaka-shi, 540-8585 (JP); Sawa, Naoki, Osaka-shi, 540-8585 (JP)
(74) Representative: Plougmann Vingtoft a/s

(57) **Abstract**

An image processing apparatus includes a first acquisition processing portion, a second acquisition processing portion, and a selection processing portion. The first acquisition processing portion acquires a first update program for software installed on a main body from an external system when the first update program exists in the external system. The second acquisition processing portion acquires a second software update program from an external memory when the second update program exists in the external memory connected to the main body. The selection processing portion selects either the first update program or the second update program as a target program to be used for software update.

## Description

### INCORPORATION BY REFERENCE

This application is based upon and claims the benefit of priority from the corresponding Japanese Patent Application No. 2025-071057 filed on April 23, 2025, the entire contents of which are incorporated herein by reference.

The present disclosure relates to an image processing apparatus and an image processing apparatus control method.

### BACKGROUND

As a related technology, an electronic device capable of acquiring firmware via a network is known. The electronic device downloads firmware from an app market server and updates the firmware.

### SUMMARY

An image processing apparatus according to one aspect of the present disclosure includes a first acquisition processing portion, a second acquisition processing portion, and a selection processing portion. The first acquisition processing portion, when a first update program for software installed on a main body exists in an external system, acquires the first update program from the external system. The second acquisition processing portion, when a second update program for the software exists in an external memory connected to the main body, acquires the second update program from the external memory. The selection processing portion selects either the first update program or the second update program as a target program to be used for updating the software.

An image processing apparatus control method according to another aspect of the present disclosure includes, when a first update program for software installed on a main body exists in an external system, acquiring the first update program from the external system. The image processing apparatus control method includes, when a second update program for the software exists in an external memory connected to the main body, acquiring the second update program from the external memory. The image processing apparatus control method includes selecting one of the first update program and the second update program as a target program to be used for updating the software.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic block diagram showing a configuration of an image processing apparatus according to an embodiment.
FIG. 2 is a schematic diagram showing an appearance of an image processing apparatus according to an embodiment.
FIG. 3 is a schematic diagram showing an example of software update in an image processing apparatus of a comparative example.
FIG. 4 is a flowchart showing an example of an operation of an image processing apparatus according to an embodiment.
FIG. 5 is a schematic diagram showing an example of software update in an image processing apparatus according to an embodiment.

### DETAILED DESCRIPTION

Hereinafter, embodiments according to the present disclosure will be described with reference to the drawings. The following embodiments are examples of specific embodiments according the present disclosure, and do not limit the technical scope of the present disclosure.

### [1] Overall Configuration of Image Processing Apparatus

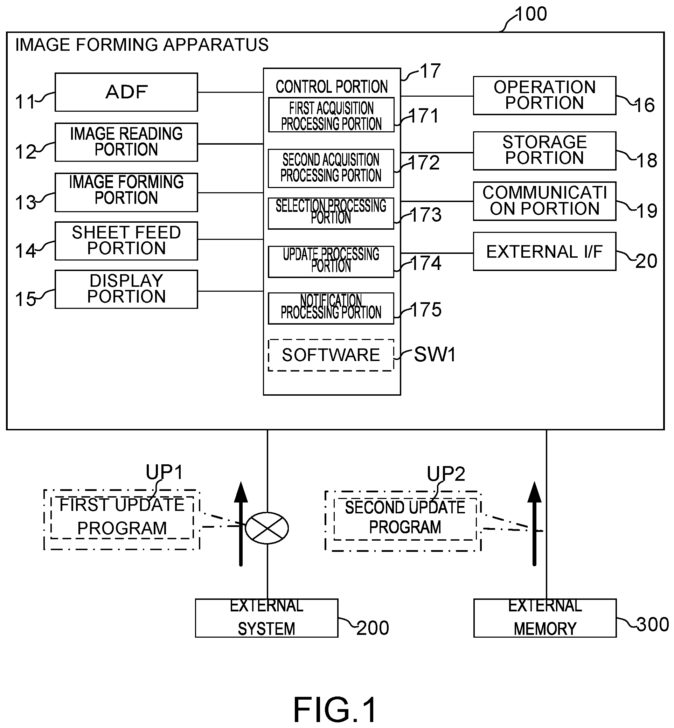

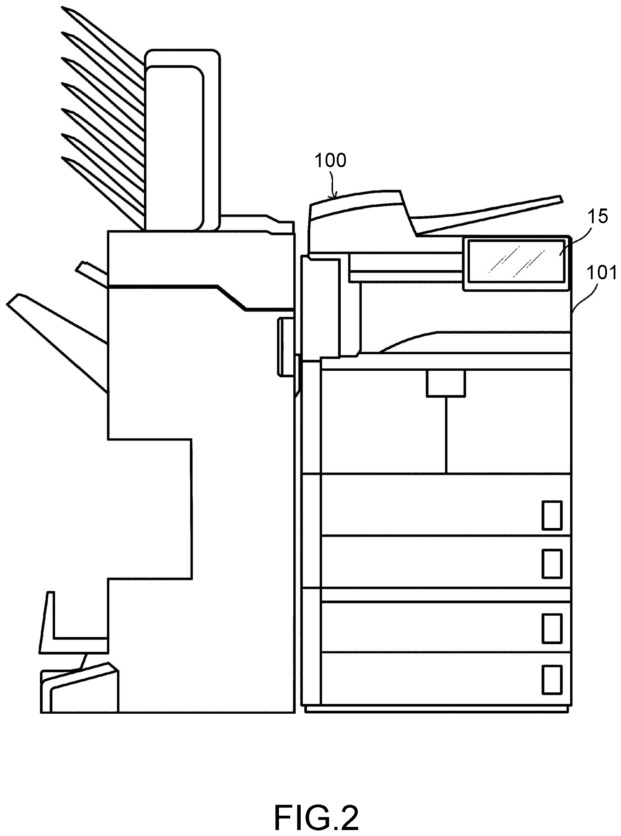

First, an overall configuration of an image processing apparatus 100 according to the present embodiment will be described with reference to FIGS. 1 and 2.

The image processing apparatus 100 according to the present embodiment is, as an example, a multifunction peripheral having multiple functions such as a scanning function for acquiring image data from a document, a printing function for forming an image based on image data, a facsimile function, and a copy function. The image processing apparatus 100 may be a printer, a scanner, a facsimile machine, a copier, or the like, as long as the image processing apparatus 100 has an image processing function including at least one of a function for forming an image and a function for acquiring image data.

As shown in FIG. 1, the image processing apparatus 100 includes an automatic document conveying device 11, an image reading portion 12, an image forming portion 13, a sheet feed portion 14, a display portion 15, an operation portion 16, a control portion 17, a storage portion 18, a communication portion 19, and an external interface 20. The automatic document conveying device 11 is an auto document feeder (ADF), and is therefore written as "ADF" in FIG. 1, and will also be referred to as "ADF 11" in the following description. In addition, the external interface 20 is an external I/F (interface), and is therefore written as "external I/F" in FIG. 1, and will also be referred to as "external I/F 20" in the following description.

In the present embodiment, as shown in FIG. 2, the image processing apparatus 100 includes a main body 101. The ADF 11, the image reading portion 12, the image forming portion 13, the sheet feed portion 14, the display portion 15, the operation portion 16, the control portion 17, the storage portion 18, the communication portion 19, and the external I/F 20 are all provided in the main body 101.

The ADF 11 conveys a document whose image is to be read by the image reading portion 12. The ADF 11 includes a document setting portion, a plurality of conveying rollers, a document holder, a sheet discharge portion, and the like.

The image reading portion 12 reads an image from a document and outputs image data corresponding to the read image. The image reading portion 12 includes a document table, a light source, a plurality of mirrors, an optical lens, a charge coupled device (CCD), and the like.

The image forming portion 13 forms an image on a sheet by an electrophotographic method based on the image data output from the image reading portion 12. In addition, the image forming portion 13 also forms an image on a sheet based on image data input from an information processing apparatus external to the image processing apparatus 100, such as a personal computer. The image forming portion 13 has four image forming units corresponding to the four colors of C (cyan), M (magenta), Y (yellow), and K (black), an optical scanning device, an intermediate transfer belt, a secondary transfer roller, a fixing device, and the like. The image forming portion 13, for example, may be configured to form an image on a sheet by an image forming method other than the electrophotographic method, such as an inkjet method.

The image forming portion 13 forms an image on a sheet using toner as a developing agent. When the image forming portion 13 forms an image by an inkjet method, ink (another example of a developing agent) is supplied instead of toner. The toner supplied to the image forming portion 13 includes toner of multiple colors, for example, C (cyan), M (magenta), Y (yellow), and K (black). After image formation in the image forming portion 13, the sheet is discharged (supplied) to an extension device or the like for post-processing.

The sheet feed portion 14 supplies sheets to the image forming portion 13. The sheet feed portion 14 includes a sheet feed cassette, a manual feed tray, a sheet conveying path, a plurality of conveying rollers, and the like. The image forming portion 13 forms an image on a sheet supplied from the sheet feed portion 14. The sheet supplied to the image forming portion 13 is paper as an example, but is not limited to paper and may be, for example, a resin film or the like.

The display portion 15 is a user interface in the image processing apparatus 100 for presenting (displaying) information to the user. The display portion 15 displays various types of information in response to control instructions from the control portion 17. In the present embodiment, as an example, the display portion 15 includes a liquid crystal display, and displays a display screen including various information on the liquid crystal display.

The operation portion 16 is, for example, a user interface for receiving user operations on a display screen displayed on the display portion 15. The operation portion 16 receives various types of operations from the user by, for example, outputting an electrical signal in response to the user's operation. In the present embodiment, as an example, the operation portion 16 includes switches, keys or a numeric keypad, a touch panel, and the like.

In addition, the image processing apparatus 100, for example, may include, as a user interface, an audio output portion, an audio input portion, or the like in addition to or instead of the display portion 15 and the operation portion 16.

The control portion 17 is mainly composed of a computer system having one or more processors and one or more memories, and controls the image processing apparatus 100 in an integrated manner. In the image processing apparatus 100, the functions of the control portion 17 are achieved by one or more processors executing programs. In the present embodiment, as an example, the control portion 17 includes a central processing unit (CPU).

The program may be pre-recorded in one or more memories, may be provided via a telecommunications line such as the Internet, or may be provided recorded on a non-transitory recording medium, such as a memory card or an optical disk, readable by a computer system. One or more processors are composed of one or more electronic circuits, including semiconductor integrated circuits. Additionally, the term computer system as used herein includes a microcontroller having one or more processors and one or more memories. The control portion 17 may be a control portion provided separately from a main control portion that performs overall control of the image processing apparatus 100.

The storage portion 18 stores in advance information such as control programs for causing the control portion 17 to execute various types of processes. In the present embodiment, the storage portion 18 includes, for example, one or more non-volatile memories such as a read only memory (ROM), a hard disk (HDD), or a solid state disk (SSD). In addition, the storage portion 18 also includes one or more volatile memories such as a random access memory (RAM).

The communication portion 19 is an interface that executes data communication between the image processing apparatus 100 and an external system 200 connected via a communication network such as, for example, the Internet or a LAN (Local Area Network). The data communication may be wired communication or wireless communication. In addition, the data communication may be wireless communication in accordance with a short-range wireless communication standard such as Near Field Communication (NFC) (registered trademark) or Bluetooth (registered trademark).

The external system 200 separately stores a first update program UP1 for updating software SW1 installed on the main body 101 of the image processing apparatus 100, for each piece of software SW1. The first update program UP1 is an official update program distributed by a manufacturer of the image processing apparatus 100 via an external system 200, for example.

For example, it is presumed that "software A," "software B," and "software C" are installed on the main body 101 of the image processing apparatus 100. In this case, the external system 200 separately stores a first update program UP1 corresponding to the "software A," a first update program UP1 corresponding to the "software B," and a first update program UP1 corresponding to the "software C." Note that the external system 200 may store only some of the first update programs UP1, rather than storing all of the first update programs UP1.

The external system 200 includes a server device connected to the Internet, for example. The external system 200 distributes the first update program UP1 to the image processing apparatus 100. That is, the image processing apparatus 100 is configured to be able to receive the first update program UP1 from the external system 200 by communicating with the external system 200 via the communication portion 19.

The external I/F 20 has a port to which an external memory 300 or an external device is connected, and is an interface that executes data communication with the external memory 300 or the external device connected to the port. In the present embodiment, the external memory 300 includes, for example, a Universal Serial Bus (USB) memory. In addition, the external device also includes, for example, a USB mass storage compatible device. Note that the external memory 300 may include, for example, an HDD or an SSD.

The external memory 300 separately stores a second update program UP2 for updating the software SW1 installed on the main body 101 of the image processing apparatus 100, for each piece of the software SW1. The second update program UP2 may include an update program that is provided prior to distribution via the external system 200 when an update of the software SW1 is urgently required, for example, in connection with security or vulnerability.

For example, it is presumed that "software A," "software B," and "software C" are installed on the main body 101 of the image processing apparatus 100. In this case, the external memory 300 separately stores a second update program UP2 corresponding to the "software A," a second update program UP2 corresponding to the "software B," and a second update program UP2 corresponding to the "software C." Note that the external memory 300 may not store all of the second update programs UP2, but may store only a portion of the second update programs UP2.

As a related technology, an electronic device capable of acquiring firmware via a network is known. The electronic device downloads firmware from an app market server and updates the firmware.

Here, when updating firmware (software), the update program for the software may be stored in an external memory such as a USB memory. In this case, the above-mentioned related technology has a problem in that after updating the software using an update program acquired via the network, the software must be further updated using an update program stored in the external memory.

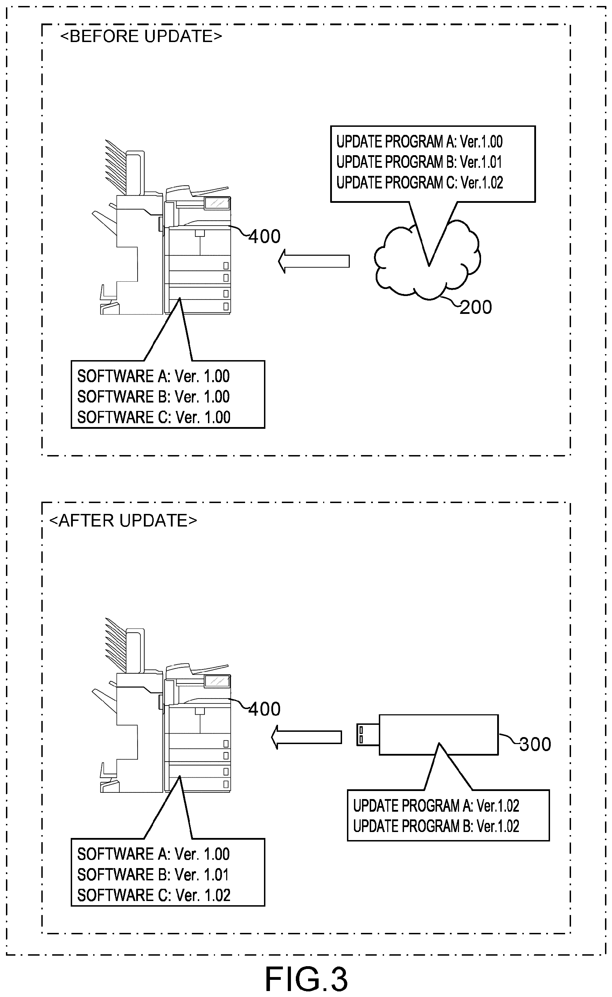

The above problem will be specifically described below with reference to an example of software update in an image processing apparatus 400 of a comparative example. First, as shown in <Before Update> in FIG. 3, the main body of the image processing apparatus 400 is assumed to be equipped with the "software A" whose version is 1.00, the "software B" whose version is 1.00, and the "software C" whose version is 1.00. In addition, it is assumed that the external system 200 stores an "update program A" whose version is 1.00, an "update program B" whose version is 1.01, and an "update program C" whose version is 1.02.

Moreover, it is also presumed that the image processing apparatus 400 is connected to an external memory 300. It is presumed that the external memory stores an "update program A" whose version is 1.02 and an "update program B" whose version is 1.02.

Here, the "update program A" is an update program corresponding to the "software A," the "update program B" is an update program corresponding to the "software B," and the "update program C" is an update program corresponding to the "software C".

First, when updating software, the image processing apparatus 400 inquires of the user whether the acquisition source of the update program should be the external system 200 or the external memory 300. The inquiry is achieved by displaying an inquiry image on the display portion 15, for example. The image processing apparatus 400 acquires the update program from the acquisition source selected by the user selection operation received by the operation portion 16. Here, it is presumed that the external system 200 is selected as the acquisition source.

Next, the image processing apparatus 400 inquires of the external system 200 whether or not there is an available update program. In this case, the external system 200 stores newer versions of the "update program B" and the "update program C" than the versions of the "software B" and the "software C" installed on the main body of the image processing apparatus 400. Therefore, the image processing apparatus 400 downloads the "update program B" and the "update program C" from the external system 200 via the network. The image processing apparatus 400 updates the "software B" using the "update program B" and updates the "software C" using the "update program C". Thus, the "software B" is updated to version 1.01, and the "software C" is updated to version 1.02.

However, the external memory 300 stores the latest version of the "update program A" that is not stored in the external system 200, as shown in <After Update> in FIG. 3. In addition, the external memory 300 stores the "update program B" that is a newer version than the "update program B" stored in the external system 200. Therefore, in order to update the "software A," the "software B," and the "software C" to the latest versions, the user must update the software again, using external memory 300 as the acquisition source of the update programs.

That is, the image processing apparatus 400 of the comparative example has a problem in that the user may have to perform software update operations multiple times. This problem may occur even when the update program is initially acquired from the external memory 300 as the acquisition source.

In contrast, in the present embodiment, the processing executed by the control portion 17 of the image processing apparatus 100 described below makes it possible to achieve an image processing apparatus 100 and a control method for the image processing device 100 that can reduce the effort required for software updates.

### [2] Configuration of the Control Portion

Hereinafter, each functional portion included in the control portion 17 will be described in more detail with reference to FIG. 1. The control portion 17 includes a first acquisition processing portion 171, a second acquisition processing portion 172, a selection processing portion 173, an update processing portion 174, and a notification processing portion 175. That is, the image processing apparatus 100 includes a first acquisition processing portion 171, a second acquisition processing portion 172, a selection processing portion 173, an update processing portion 174, and a notification processing portion 175 as functions of the control portion 17.

Furthermore, the control portion 17 is equipped with one or more pieces of software SW1. "Software" as used in the present disclosure includes firmware and applications. Firmware is software for controlling a computer system (control portion 17) incorporated into the main body 101 of the image processing apparatus 100, and refers to software that is pre-written into an integrated circuit such as a ROM and incorporated into the main body 101. The firmware has a function of managing basic control of the main body 101 having an image processing function.

An application is software that provides functions according to a user's purpose, and is installed by the user onto the main body 101 of the image processing apparatus 100 as appropriate. The functions provided by the application include, for example, a function to download data present on cloud computing to the image processing apparatus 100 and print the data on a sheet. In addition, the functions provided by the application also include a function for remotely operating the image processing apparatus 100 using a portable information processing terminal such as a smartphone carried by a user.

The first acquisition processing portion 171 executes a first acquisition process to acquire the first update program UP1 from the external system 200 when the first update program UP1 of the software SW1 installed on the main body 101 exists in the external system 200. In the present embodiment, the first acquisition processing portion 171 executes the first acquisition process when, for example, the operation portion 16 receives an operation by the user to start updating the software SW1.

In the first acquisition process, the first acquisition processing portion 171 inquires of the external system 200 whether or not there is available software SW1. In the present disclosure, "available software" may include, for example, the latest version of the software SW1 at the time of inquiry. Furthermore, "available software" may include, for example, a version of the software SW1 that is not the latest at the time of inquiry but is newer than the version of the software SW1 installed on main body 101. In a case in which available software SW1 exists, the first acquisition processing portion 171 acquires from the external system 200 the first update program UP1 used to update the software SW1 installed on the main body 101 to the available software SW1.

That is, the first acquisition processing portion 171 acquires the first update program UP1 from the external system 200 by downloading. On the other hand, in a case in which there is no available software SW1, the first acquisition processing portion 171 does not acquire the first update program UP1. The first acquisition processing portion 171 executes the above-described first acquisition process for all of the software SW1 installed on the main body 101.

For example, it is presumed that the "software A," the "software B," and the "software C" are installed on the main body 101. In addition, it is also presumed that the external system 200 stores the first update program UP1 for the "software A" and the first update program UP1 for the "software C." In this case, the first acquisition processing portion 171 acquires the first update program UP1 for the "software A" and the first update program UP1 for the "software C."

The second acquisition processing portion 172 executes a second acquisition process to acquire the second update program UP2 from the external memory 300 when the second update program UP2 of the software SW1 installed on the main body 101 is present in the external memory 300 connected to the main body 101. In the present embodiment, the second acquisition processing portion 172 executes the second acquisition process when, for example, the operation portion 16 receives an operation by the user to start updating the software SW1. Note that the second acquisition process may be executed before the first acquisition process, after the first acquisition process, or in parallel with the first acquisition process.

In the second acquisition process, the second acquisition processing portion 172 scans the external memory 300 to check whether the external memory 300 stores the available software SW1. In a case in which the available software SW1 exists, the second acquisition processing portion 172 acquires from the external memory 300 the second update program UP2 used to update the software SW1 installed on the main body 101 to the available software SW1.

That is, the second acquisition processing portion 172 acquires the second update program UP2 from the external memory 300 by reading data from the external memory 300 via the external I/F 20. On the other hand, in a case in which there is no available software SW1, the second acquisition processing portion 172 does not acquire the second update program UP2. The second acquisition processing portion 172 executes the above-described second acquisition process for all of the software SW1 installed on the main body 101.

For example, it is presumed that the "software A," the "software B," and the "software C" are installed on the main body 101. In addition, it is also presumed that the external memory 300 stores the second update program UP2 for the "software B" and the second update program UP2 for the "software C." In this case, the second acquisition processing portion 172 acquires the second update program UP2 for the "software B" and the second update program UP2 for the "software C."

The selection processing portion 173 executes a selection process to select either the first update program UP1 or the second update program UP2 as a target program to be used for updating the software SW1. The selection processing portion 173 executes the above selection process for all the software SW1 installed on the main body 101.

For example, for any software SW1 installed on the main body 101, it is presumed that the first update program UP1 is acquired from the external system 200, but the second update program UP2 is not acquired from the external memory 300. In this case, the selection processing portion 173 selects the first update program UP1 as the target program to be used for updating the software SW1. In addition, for the software SW1, it is presumed that the second update program UP2 is acquired from the external memory 300; however, the first update program UP1 is not acquired from the external system 200. In this case, the selection processing portion 173 selects the second update program UP2 as the target program to be used for updating the software SW1.

In addition, in a case in which either the first update program UP1 or the second update program UP2 can be the target program, the selection processing portion 173 selects the update program with the newer version as the target program. For example, it is presumed that for any software SW1 installed on the main body 101 of the image processing apparatus 100, the first update program UP1 is acquired from the external system 200, and the second update program UP2 is acquired from the external memory 300. In this case, both the first update program UP1 and the second update program UP2 can be target programs. In this case, the selection processing portion 173 selects the newer version of the update program from the first update program UP1 and the second update program UP2 as the target program.

The update processing portion 174 executes an update process for updating the software SW1 using the target program selected by the selection processing portion 173. The update processing portion 174 executes the above update processing for all the selected target programs. In the present embodiment, the update processing portion 174 executes the update process when, for example, the operation portion 16 receives an approval operation from the user approving the execution of the update process.

For example, it is presumed that the first update program UP1 is selected as the target program for any software SW1 installed on the main body 101. In this case, the update processing portion 174 uses the first update program UP1 to update the software SW1.

The notification processing portion 175 executes a notification process for notifying the target program selected by the selection processing portion 173. More specifically, the notification processing portion 175 notifies the user of the selected target programs by displaying a list of the selected target programs on the display portion 15. Thus, it is possible for the user to know the software SW1 to be updated and the program that will be used to update the software SW1. Note that a notification of the target program may be made by outputting sound from a speaker built into the image processing apparatus 100.

When there is a large number of software SW1 installed on the main body 101, the number of update programs selected as the target program by the selection processing portion 173, that is, the number of candidate target programs, may be large. In this case, the more update programs there are, the longer the time required to update the software SW1. In a case in which the image processing apparatus 100 is unable to execute functions other than updating the software SW1 while the software SW1 is being updated, the user will be unable to use the image processing apparatus 100 for a long period of time, which will result in a problem of poor usability. In addition, even in the case of an image processing apparatus 100 that can execute functions other than updating software SW1 while the software SW1 is being updated, there is a problem in that a processing load caused by updating software SW1 increases, slowing down operations to execute other functions, and thus reducing usability.

Therefore, the selection processing portion 173 may execute a first exclusion process when the number of first update programs UP1 that are candidates for the target program exceeds a first value. The first exclusion process is a process of excluding some of the first update programs UP1 from the target programs so that the number of the first update programs UP1 is equal to or less than a first value. Here, the first value may be set in advance during the manufacturing stage of the image processing apparatus 100, or may be set appropriately by the user. In addition, the first update program UP1 to be excluded may be selected automatically by the selection processing portion 173 or may be selected by the user. Thus, it possible to reduce the number of update programs (here, the first update program UP1) used when updating the software SW1, thereby solving the above problem.

In addition, the selection processing portion 173 may execute a second exclusion process when the number of second update programs UP2 that are candidates for the target program exceeds a second value. The second exclusion process is a process of excluding some of the second update programs UP2 from the target programs so that the number of the second update programs UP2 is equal to or less than a second value. Here, the second value may be set in advance during the manufacturing stage of the image processing apparatus 100, or may be set appropriately by the user. In addition, the second update program UP2 to be excluded may be selected automatically by the selection processing portion 173 or may be selected by the user. Thus, it possible to reduce the number of update programs (here, the second update program UP2) used when updating the software SW1, thereby solving the above problem.

Moreover, the selection processing portion 173 may execute a third exclusion process when the number of candidate target programs, including the first update program UP1 and the second update program UP2, exceeds a third value. The third exclusion process is a process of excluding some candidate target programs from the target programs as carry-over programs so that the number of candidate target programs is equal to or less than a third value. The selection processing portion 173 may select a carried-over program as the target program when selecting a target program from the next time onward.

Here, the third value may be set in advance during the manufacturing stage of the image processing apparatus 100, or may be set appropriately by the user. The carry-over programs may be automatically selected by the selection processing portion 173 or may be selected by the user. Thus, it is possible to reduce the number of update programs (target programs in this case) used when updating the software SW1, thereby solving the above problem. In addition, the carry-over programs that have been excluded from the update targets are preferentially selected as target programs from the next time onward. Therefore, a carried-over program is used to update the corresponding software SW1, which makes it easy to prevent the software SW1 from being overlooked in updating.

### [3] Operation Example of Image Processing Apparatus

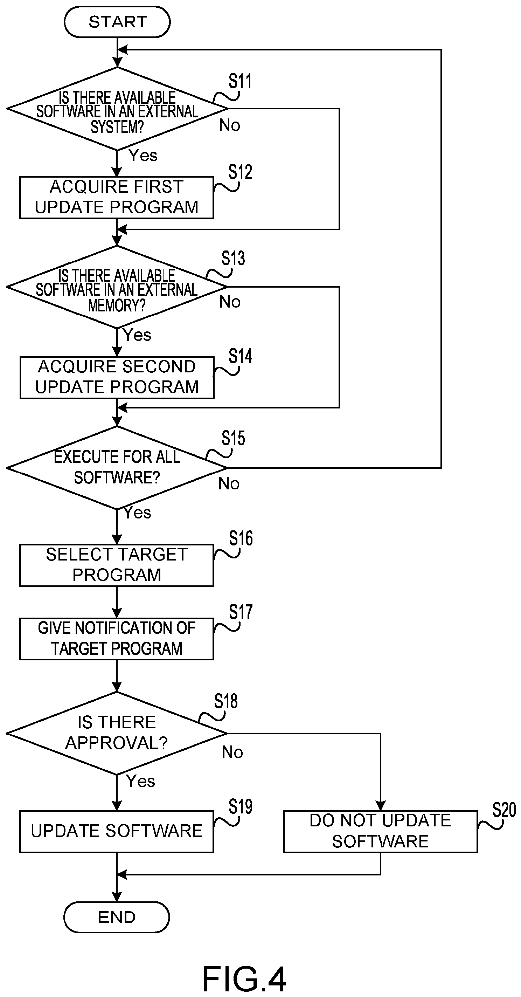

Hereinafter, an example of a procedure of processing executed by the image processing apparatus 100 and an example of a control method for the image processing apparatus 100 of the present embodiment will be described with reference to FIG. 4. Here, steps S11, S12, and so on represent numbers of processing procedures (steps) executed by the image processing apparatus 100. The process is started, for example, when the operation portion 16 receives an operation by the user to start updating the software SW1.

### <Step S11>

The first acquisition processing unit 171 of the image processing apparatus 100 executes the first acquisition process. First, the first acquisition processing portion 171 inquires of the external system 200 whether or not available software SW1 is available. When the inquiry result indicates that software SW1 is available in the external system 200 (step S11: YES), the first acquisition processing portion 171 executes step S12. On the other hand, when there is no available software SW1 in the external system 200 (step S11: NO), the image processing apparatus 100 executes step S13.

### <Step S12>

The first acquisition processing portion 171 acquires the first update program UP1. Here, the first acquisition processing portion 171 acquires the first update program UP1 from the external system 200 by downloading.

### <Step S13>

The second acquisition processing portion 172 of the image processing apparatus 100 executes the second acquisition process. First, the second acquisition processing portion 172 scans the external memory 300 to check whether the external memory 300 stores available software SW1. When the check result indicates that available software SW1 exists in the external memory 300 (step S13: YES), the second acquisition processing portion 172 executes step S14. On the other hand, when there is no available software SW1 in the external memory 300 (step S13: NO), the image processing apparatus 100 executes step S15.

### <Step S14>

The second acquisition processing portion 172 acquires the second update program UP2. Here, the second acquisition processing portion 172 acquires the second update program UP2 from the external memory 300 by reading data from the external memory 300 via the external I/F 20.

### <Step S15>

The image processing apparatus 100 checks whether or not the series of processes in steps S11 to S14 has been executed for all of the software SW1 installed on the main body 101. When the series of processes in steps S11 to S14 have been executed for all the software SW1 (step S15: YES), the image processing apparatus 100 executes step S16. On the other hand, when there is software SW1 for which the series of processes of steps S11 to S14 has not yet been executed (step S15: NO), the image processing apparatus 100 executes the unexecuted processes of steps S11 to S14 for the software SW1.

### <Step S16>

The selection processing portion 173 of the image processing apparatus 100 executes a selection process for selecting either the first update program UP1 or the second update program UP2 as the target program for any one of the software SW1. The selection processing portion 173 executes the above selection process for all the software SW1 installed on the main body 101. Note that when there is no update program corresponding to the software SW1, the selection processing portion 173 does not execute the selection process for the software SW1.

### <Step S17>

The notification processing portion 175 of the image processing apparatus 100 executes a notification process for notifying the target program selected by the selection processing portion 173. Here, the notification processing portion 175 displays a list of the selected target programs on the display portion 15.

### <Step S18>

The image processing apparatus 100 uses the target program to inquire whether or not to update the software SW1. For example, the update processing portion 174 inquires of the user by displaying a message on the display portion 15 such as "The software listed can be updated. Would you like to update it?" Note that the inquiry to the user may be made by outputting a voice from a speaker built into the image processing apparatus 100. When the operation portion 16 receives an approval operation from the user approving the execution of the update process (step S18: YES), the image processing apparatus 100 executes step S19. On the other hand, when the operation portion 16 does not receive the approval operation from the user (step S18: NO), the image processing apparatus 100 executes step S20.

### <Step S19>

The update processing portion 174 of the image processing apparatus 100 executes update processing for updating the software SW1 using the target program selected by the selection processing portion 173. The update processing portion 174 executes the above update processing for all the selected target programs.

### <Step S20>

The update processing portion 174 does not execute the update process.

Note that in the above process, the update processing portion 174 may update the software SW1 without obtaining approval from the user. In this case, steps S19 and S20 are unnecessary.

In addition, the procedure described above is merely an example, and the order of the processes shown in the flowchart of FIG. 4 may be changed as appropriate.

### [4] Software Update Example

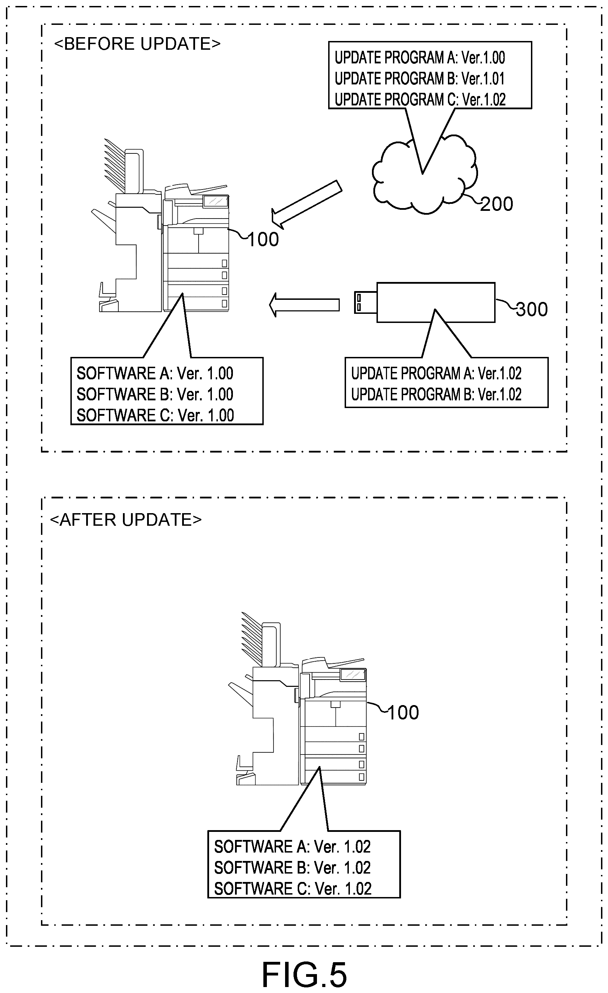

A specific example of updating the software SW1 executed by the image processing apparatus 100 will be described below with reference to FIG. 5. Note that in the example shown in <Before Update> in FIG. 5, the software SW1 installed on the image processing apparatus 100 is the same as the software SW1 installed on the image processing apparatus 400 of the comparative example shown in FIG. 3, so an explanation will be omitted here. In addition, in the example shown in <Before Update> of FIG. 5, the update program stored in the external system 200 is the same as the update program stored in the external system 200 shown in FIG. 3, so an explanation will be omitted here. In addition, in the example shown in <Before Update> in FIG. 5, the update program stored in the external memory 300 is the same as the update program stored in the external memory 300 shown in FIG. 3, so a description thereof will be omitted here.

First, when the operation portion 16 receives an operation by the user to start updating the software SW1, the image processing apparatus 100 acquires an update program from the external system 200. Here, the external system 200 stores newer versions of the "update program B" and the "update program C" than the versions of the "software B" and the "software C" installed on the main body of the image processing apparatus 100. Therefore, the image processing apparatus 100 downloads the "update program B" and the "update program C" from the external system 200 via the network, and acquires these update programs as the first update program UP1.

Next, the image processing apparatus 100 acquires the update program from the external memory 300. Here, the external memory 300 stores newer versions of the "update program A" and the "update program B" than the versions of the "software A" and the "software B" installed on the main body of the image processing apparatus 100. Therefore, the image processing apparatus 100 reads out the "update program B" and the "update program C" from the external memory 300 via the external I/F 20, and acquires these update programs as the second update program UP2.

Next, the image processing apparatus 100 executes a process for each software SW1 to select either the first update program UP1 acquired from the external system 200 or the second update program UP2 acquired from the external memory 300 as the target program. More specifically, for the "software A," the image processing apparatus 100 selects the "update program A" (second update program UP2) acquired from the external memory 300 as the target program. In addition, for the "software B," there exists the "update program B" (first update program UP1) acquired from the external system 200 and the "update program B" (second update program UP2) acquired from the external memory 300. In this case, since the version of the "update program B" acquired from the external memory 300 is newer, the image processing apparatus 100 selects the "update program B" as the target program. In addition, for the "software C," the image processing apparatus 100 selects the "update program C" (first update program UP1) acquired from the external system 200 as the target program.

Thereafter, the image processing apparatus 100 presents a list of target programs to the user, and upon receiving approval from the user for updating the software SW1, executes the update of each piece of software SW1 using the target programs. Thus, it is possible to simultaneously update all of the software SW1 installed on the main body 101 using the latest version of the update program stored in either the external system 200 or the external memory 300.

As described above, the image processing apparatus 100 according to the present embodiment refers to both the external system 200 and the external memory 300 to acquire an update program when updating the software SW1. The image processing apparatus 100 selects either the first update program UP1 acquired from the external system 200 or the second update program UP2 acquired from the external memory 300 as the target program. Therefore, it is not necessary to separately update the software SW1 when the external system 200 is used as the source of the update program and when the external memory 300 is used as the source of the update program. Therefore, in the image processing apparatus 100 according to the present embodiment, it is only necessary to perform a single update of the software SW1 instead of multiple updates of the software SW1, thereby reducing the effort required to update the software SW1.

### [Modification]

In the present embodiment, the plurality of components included in the image processing apparatus 100 may be distributed across a plurality of housings. For example, the first acquisition processing portion 171, the second acquisition processing portion 172, the selection processing portion 173, the update processing portion 174, and the notification processing portion 175 may be provided separately.

In the present embodiment, the image processing apparatus 100 presents a list of selected target programs to the user and executes the software update after obtaining approval from the user; however, the present invention is not limited to this. For example, the image processing apparatus 100 may automatically perform software updates without user approval. In this case, the image processing apparatus 100 may present the user with a list of updated software after the software has been updated.

In the present embodiment, the image processing apparatus 100 presents a list of selected target programs to the user, but the present invention is not limited to this. For example, the image processing apparatus 100 may perform software updates without presenting a list of target programs to the user. In this case, the image processing apparatus 100 does not need to include the notification processing portion 175.

In the present embodiment, the processes performed by the processing portions 171 to 175 in the image processing apparatus 100 are executed when the operation portion 16 receives an operation by the user to start a software update; however, is not limited to this. For example, the processes performed by the processing portions 171 to 175 in the image processing apparatus 100 may be automatically executed periodically.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image processing apparatus (100), comprising:
a first acquisition processing portion (171) configured to acquire a first update program (UP1) for software (SW1) installed on a main body (101) from an external system (200) when the first update program (UP1) exists in the external system (200);
a second acquisition processing portion (172) configured to acquire a second update program (UP2) for the software (SW1) from an external memory (300) connected to the main body (101) when the second update program (UP2) exists in the external memory (300); and
a selection processing portion (173) configured to select either the first update program (UP1) or the second update program (UP2) as a target program to be used for updating the software (SW1).

2. The image processing apparatus (100) according to claim 1, wherein
the selection processing portion (173), when either the first update program (UP1) or the second update program (UP2) can be the target program, selects the update program with a newer version as the target program.

3. The image processing apparatus (100) according to claim 1 or claim 2, further comprising
a notification processing portion (175) configured to give notification of the selected target program.

4. The image processing apparatus (100) according to any one of claims 1 to 3, further comprising
an update processing portion (174) configured to update the software using the selected target program.

5. The image processing apparatus (100) according to any one of claims 1 to 4, wherein
the selection processing portion (173), when the number of the first update programs (UP1) that are candidates for the target programs exceeds a first value, excludes some of the first update programs (UP1) from the target program so that the number of the first update programs (UP1) is equal to or less than the first value.

6. The image processing apparatus (100) according to any one of claims 1 to 5, wherein
the selection processing portion (173), when the number of the second update programs (UP2) that are candidates for the target programs exceeds a second value, excludes some of the second update programs (UP2) from the target program so that the number of the second update programs (UP2) is equal to or less than the second value.

7. The image processing apparatus (100) according to any one of claims 1 to 6, wherein
the selection processing portion (173)
excludes, when a number of candidates for the target program exceeds a third value, some of the candidates for the target program from the target program as carry-over programs so that the number of candidates for the target program is equal to or less than the third value; and
selects the carried-over programs as the target programs when selecting the target program the next time or later.

8. An image processing apparatus (100) control method, comprising:
acquiring, when a first update program (UP1) for software (SW1) installed on a main body (101) exists in an external system (200), the first update program (UP1) from the external system (200);
acquiring, when a second update program (UP2) for the software (SW1) exists in an external memory (300) connected to the main body (101), the second update program (UP2) from the external memory (300); and
selecting either the first update program (UP1) or the second update program (UP2) as a target program to be used for updating the software (SW1).
